# EUROPEAN PATENT SPECIFICATION

(11) **EP 3 178 698 B1**
(45) Date of publication and mention of the grant of the patent: **05.03.2025**
(21) Application number: 16202628.0
(22) Date of filing: 07.12.2016
(51) Int. Cl.: B60Q 1/22, B60Q 1/38

(54) **AUTOMOTIVE LAMP AND METHOD OF CONTROLLING THE SAME**
FAHRZEUGLAMPE UND VERFAHREN ZUR STEUERUNG DAVON
PHARE D'AUTOMOBILE ET SON PROCÉDÉ DE COMMANDE

(30) Priority: 07.12.2015 KR 20150172977; 09.11.2016 KR 20160149035
(43) Date of publication of application: 14.06.2017
(73) Proprietor: SL Corporation, Daegu (KR)
(72) Inventor: Park, Jong Ryoul, Gyeongsanbu-do 77 (KR); Han, Hye Jin, Gyeongsanbu-do 77 (KR)
(74) Representative: BCKIP Part mbB

(56) References cited:
- EP-A1- 3 173 686
- EP-A2- 1 334 869
- EP-A2- 1 433 655
- JP-A- 2008 155 767
- KR-A- 20150 106 687
- US-A1- 2005 117 364
- US-A1- 2011 128 141
- US-A1- 2012 075 875
- US-A1- 2013 335 212
- US-A1- 2014 328 071

## Description

### CROSS-REFERENCE TO RELATED APPLICATION

This application claims priority to and the benefit of Korean Patent Application No. 10-2016-0149035 filed in the Korean Intellectual Property Office on November 9, 2016, and Korean Patent Application No. 10-2015-0172977 filed in the Korean Intellectual Property Office on December 7, 2015.

### BACKGROUND

### 1. Technical Field

The present invention relates to an automotive lamp and a method of controlling the automotive lamp, and more particularly, to an automotive lamp that forms a road pattern around a vehicle to indicate a driving direction of the vehicle to nearby vehicles or pedestrians and a method of controlling the automotive lamp.

### 2. Description of the Related Art

Generally, a vehicle includes various types of lamps having a lighting function and a signaling function. The lighting function enables the driver of the vehicle to more easily detect objects around the vehicle while driving during low light conditions. The signaling function is used to inform other vehicles and road users of the vehicle's intended driving state. For example, a headlamp and a fog lamp are designed primarily to provide the lighting function, and a turn signal lamp, a backup lamp, a brake lamp and a side marker are designed primarily to provide the signaling function.

In particular, the turn signal lamp is installed on the front or back of a vehicle to inform other vehicles or pedestrians of the turning direction of the vehicle by flashing on and off when the driving direction of the vehicle is changed, for example, when the vehicle turns left or right at the crossroads or changes lanes. In addition, the backup lamp is turned on when the vehicle reverses to inform other vehicles of the reversing of the vehicle to provide neighboring vehicles the opportunity to adjust to the changed driving situation.

In other words, even when the turn signal lamp flashes on and off to indicate the turning direction of the vehicle, it may be difficult for a vehicle coming from the turning direction of the vehicle or a vehicle located adjacent to the vehicle to recognize the turning direction of the vehicle. In addition, even when the backup lamp is turned on to indicate the reversing of the vehicle, it may be difficult for a vehicle located on a side of the vehicle to recognize the reversing of the vehicle. Therefore, there is a need for a solution that enables the drivers of other vehicles to more easily recognize the driving direction of the vehicle even in a situation where it is difficult to notice the flashing of the turn signal lamp or the lighting of the backup lamp.

The above information disclosed in this section is merely for enhancement of understanding of the background of the disclosure and therefore it may contain information that does not form the prior art that is already known in this country to a person of ordinary skill in the art.

US 2013/0335212 A1 discloses a vehicle turn signalling apparatus including a light source that is powered by a turn signal circuit of the vehicle. The light source is configured to project a low divergence visible line onto a driving lane adjacent to a vehicle. The vehicle turn signalling apparatus includes one or more laser light devices and a turn signal laser light projection activation circuit configured to receive a turn signal which indicates that the driver intends to move the vehicle to the road surface adjacent to the vehicle. The turn signal is generated responsive to a driver moving a turn signal stick. A turn signal laser light projection activation circuit receives the turn signal (e.g., from a conventional turn signal circuit) and is configured to respond to the turn signal by controlling the laser light devices to project the laser light beam toward the road surface adjacent to the vehicle and to control the laser light devices to adjust power density of the laser light beam responsive to an ambient light brightness signal.

KR20150106687A discloses a vehicle headlamp with an integrated direction indicator module and a module for irradiating a direction guide beam pattern on the road surface. The common controller operates the flashing of both modules.

### SUMMARY

The present invention provides an automotive lamp which enables nearby vehicles or pedestrians to more easily recognize a driving direction of a vehicle by forming a road pattern for indicating the driving direction of the vehicle on at least one side in front of or behind the vehicle and a method of controlling the automotive lamp. According to the present invention, an automotive lamp includes a driving direction sensing unit configured to sense a driving direction of a vehicle, a driving direction indicating unit disposed on at least one side of the front or back of the vehicle and configured to indicate the driving direction of the vehicle, and a control unit configured to operate the driving direction indicating unit based on the sensed driving direction. The driving direction indicating unit includes a first lamp module and a second lamp module which has luminous intensity greater than that of the first lamp module and is linked with the first lamp module to form a road pattern on at least one side around the vehicle to indicate the driving direction of the vehicle. The second lamp module is coupled with the first lamp module so that, when the first lamp module turns on, the second lamp module forms the road pattern. The road pattern includes at least one light irradiation pattern disposed in a predetermined direction from the vehicle. The driving direction indicating unit is disposed in any one of a plurality of cavities defined by a plurality of lamps used for different purposes, and the first lamp module and the second lamp module share a lens that corresponds to the cavity in which the driving direction indicating unit is installed. A vertical light irradiation angle of the second lamp module is in the range of about 15 to 45 degrees.

In another exemplary embodiment, the driving direction indicating unit may be configured to sense at least one of the turning direction and reversing of the vehicle. The automotive lamp may include the first lamp module and the second lamp module configured to flash on and off or remain turned on. The road pattern may include a plurality of light irradiation patterns,. The irradiation patterns may have the same or different sizes. The light irradiation patterns may be formed sequentially in a predetermined order. The driving direction indicating unit may be disposed in any one of a plurality of cavities defined by a plurality of lamps used for different purposes, and the first lamp module and the second lamp module share a lens that corresponds to the cavity in which the driving direction indicating unit is installed .

The control unit may be configured to simultaneously turn on or off the first lamp module and the second lamp module. The control unit may be configured to turn off the second lamp module when at least one light source included in the first lamp module is turned off. The control unit may be configured to adjust the luminous intensity of the second lamp module based on ambient brightness of the vehicle.

In some exemplary embodiments, the luminous intensity of the second lamp module may be in the range of 4,300 to 13,000 cd. The luminous intensity of the second lamp module may be in the range of 5,000 to 10,000 cd. The luminous intensity of the second lamp module may be in the range of 5,500 to 8,500 cd.

In other exemplary embodiments, the horizontal light irradiation angle of the second lamp module may be in the range of about 0 to 45 degrees. The horizontal light irradiation angle of the second lamp module may be in the range of about 5 to 45 degrees. The horizontal light irradiation angle of the second lamp module may be in the range of about 10 to 45 degrees. The horizontal light irradiation angle of the second lamp module may be in the range of about 20 to 45 degrees.

The automotive lamp may include a nearby vehicle sensing unit configured to sense a nearby vehicle. The control unit may be configured to remove at least part of the at least one light irradiation pattern by turning off at least one light source included in the second lamp module based on the position of the nearby vehicle.

According to another aspect of the present invention, a method of controlling an automotive lamp includes sensing, by a controller a driving direction of a vehicle, forming a flashing pattern or a lighting pattern, which indicates the driving direction of the vehicle, using the first lamp module and forming a road pattern on at least one side around the vehicle to indicate the driving direction of the vehicle using a second lamp module which has luminous intensity greater than that of the first lamp module. The road pattern includes at least one light irradiation pattern disposed in a predetermined direction from the vehicle. The second lamp module is coupled with the first lamp module so that, when the first lamp module turns on, the second lamp module forms the road pattern. The flashing pattern or the lighting pattern and the road pattern are irradiated via one lens and formed using the first lamp module and the second lamp module, respectively, wherein a driving direction indicating unit comprising the first lamp module and the second lamp module is disposed in any one of a plurality of cavities defined by a plurality of lamps used for different purposes, and-the first lamp module and the second lamp module share the lens that corresponds to the cavity in which driving direction indicating unit is installed, and a vertical light irradiation angle of the second lamp module is in the range of about 15 to 45 degrees.

In some exemplary embodiments, forming of the road pattern may include simultaneously turning on the first lamp module and the second lamp module, and turning off the second lamp module when at least one light source included in the first lamp module is turned off. The forming of the road pattern may include adjusting the luminous intensity of the second lamp module based on ambient brightness of the vehicle.

In another exemplary embodiment, the road pattern may include a plurality of light irradiation patterns, and the road pattern may include sequentially forming the light irradiation patterns in a predetermined order.

The road pattern may include a plurality of light irradiation patterns, and may include forming the light irradiation patterns to have the same or different sizes. In another exemplary embodiment, forming of the road pattern may include removing at least part of the at least one light irradiation pattern based on the position of the nearby vehicle.

### BRIEF DESCRIPTION OF THE DRAWINGS

These and other aspects will become apparent and more readily appreciated from the following description of the embodiments, taken in conjunction with the accompanying drawings in which:
FIG. 1 is an exemplary block diagram of an automotive lamp according to an exemplary embodiment of the present invention;
FIG. 2 is an exemplary schematic diagram illustrating a driving direction indicating unit according to an exemplary embodiment of the present invention;
FIGS. 3 and 4 are exemplary schematic diagrams illustrating one or more light irradiation patterns included in a road pattern formed by the driving direction indicating unit according to the first exemplary embodiment of the present invention;
FIGS. 5 and 6 are exemplary schematic diagrams illustrating the structure of a first lamp module and a second lamp module according to the first exemplary embodiment of the present invention;
FIGS. 7 through 11 are exemplary schematic diagrams illustrating road patterns formed by the driving direction indicating unit according to the first exemplary embodiment of the present invention;
FIG. 12 is an exemplary schematic diagram illustrating a horizontal light irradiation angle of the driving direction indicating unit according to the first exemplary embodiment of the present invention;
FIGS. 13 and 14 are exemplary schematic diagrams illustrating the position of a road pattern according to the horizontal light irradiation angle of the driving direction indicating unit according to the first exemplary embodiment of the present invention;
FIG. 15 is an exemplary schematic diagram illustrating the position of a road pattern formed by the driving direction indicating unit according to the first exemplary embodiment of the present invention;
FIG. 16 is an exemplary schematic diagram illustrating a vertical light irradiation angle of the driving direction indicating unit according to the first exemplary embodiment of the present invention;
FIG. 17 is an exemplary schematic diagram illustrating a light irradiation area of the first lamp module according to the first exemplary embodiment of the present invention;
FIG. 18 is an exemplary schematic diagram illustrating a driving direction indicating unit according to a second exemplary embodiment of the present invention;
FIGS. 19 through 22 are exemplary schematic diagrams illustrating road patterns formed by the driving direction indicating unit according to the second exemplary embodiment of the present invention;
FIG. 23 is an exemplary schematic diagram illustrating a horizontal light irradiation angle of the driving direction indicating unit according to the second exemplary embodiment of the present invention;
FIG. 24 is an exemplary schematic diagram illustrating a vertical light irradiation angle of the driving direction indicating unit according to the second exemplary embodiment of the present invention;
FIG. 25 is an exemplary schematic diagram illustrating a light irradiation area of a first lamp module according to the second exemplary embodiment of the present invention;
FIG. 26 is an exemplary schematic diagram illustrating the position of a road pattern formed by the driving direction indicating unit according to the second embodiment;
FIGS. 27 and 28 are exemplary schematic diagrams illustrating processes in which road patterns are formed by the driving direction indicating units according to the first and second exemplary embodiments of the present invention;
FIG. 29 is an exemplary block diagram of an automotive lamp according to an exemplary embodiment of the present invention;
FIGS. 30 and 31 are exemplary schematic diagrams illustrating road patterns formed by the automotive lamp of FIG. 29 and partially removed according to the position of a nearby vehicle according to an exemplary embodiment of the present invention;
FIG. 32 is an exemplary flowchart illustrating a method of controlling an automotive lamp according to an exemplary embodiment of the present invention; and
FIG. 33 is an exemplary flowchart illustrating a method of controlling an automotive lamp according to an exemplary embodiment of the present invention.

### DETAILED DESCRIPTION

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this invention will be thorough and complete and will fully convey the concept of the invention to those skilled in the art, and the present invention will only be defined by the appended claims. Like reference numerals refer to like components throughout the specification.

In some embodiments, well-known processing processes, well-known structures and well-known technologies will not be specifically described in order to avoid ambiguous interpretation of the present invention.

The terminology used herein is for the purpose of describing particular embodiments only and is not intended to be limiting of the present invention.

As used herein, the singular forms "a", "an" and "the" are intended to include the plural forms as well, unless the context clearly indicates otherwise. It will be further understood that the terms "comprises" and/or "comprising," when used in this specification, specify the presence of stated components, steps, and/or operations, but do not preclude the presence or addition of one or more other components, steps, operations, and/or groups thereof. As used herein, the term "and/or" includes any and all combinations of one or more of the associated listed items.

Embodiments of the present invention are described herein with reference to perspective, cross-sectional, side and/or schematic illustrations that are illustrations of idealized embodiments of the present invention.

As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing. In addition, each component shown in figures of the present invention may have been enlarged or reduced for ease of description. Hereinafter, an automotive lamp and a method of controlling the same according to embodiments of the present invention will be described with reference to the attached drawings.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

It is understood that the term "vehicle" or "vehicular" or other similar term as used herein is inclusive of motor vehicle in general such as passenger automobiles including sports utility vehicles (SUV), buses, trucks, various commercial vehicles, watercraft including a variety of boats, ships, aircraft, and the like and includes hybrid vehicles, electric vehicles, combustion, plug-in hybrid electric vehicles, hydrogen-powered vehicles and other alternative fuel vehicles (e.g. fuels derived from resources other than petroleum).

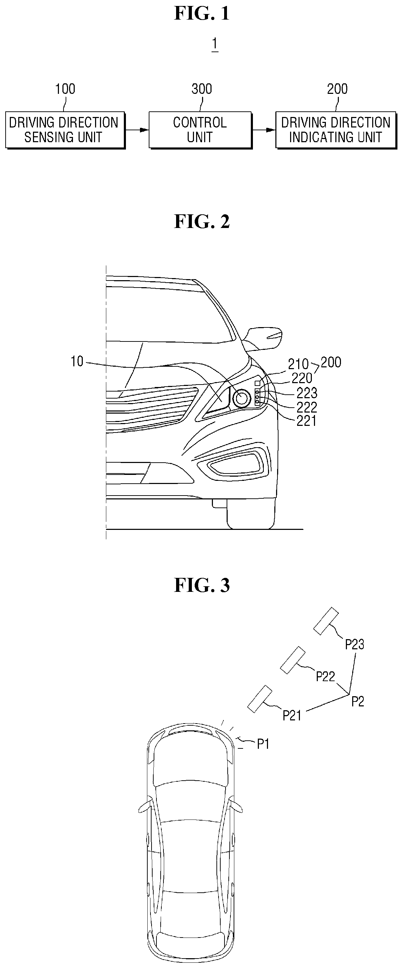

FIG. 1 is an exemplary schematic diagram of an automotive lamp 1 according to an embodiment. Referring to FIG. 1, the automotive lamp 1 according to the exemplary embodiment may include a driving direction sensing unit 100, a driving direction indicating unit 200, and a control unit 300. The driving direction sensing unit 100 may be configured to sense a driving direction of a vehicle that may include a turning direction of the vehicle or the advancing or reversing of the vehicle. In the exemplary embodiment, the turning direction of the vehicle may include a left turn or a right turn at a crossroads, a lane change, a U-turn, etc.

The driving direction sensing unit 100 may be configured to sense the advancing or reversing of the vehicle through, e.g., a gear and the turning direction of the vehicle through an angle of rotation of a handle or wheels, a driver's manipulation, a lane sensed, etc. The driving direction indicating unit 200 may be disposed on at least one side of the front or back of the vehicle to indicate the driving direction of the vehicle. For example, to indicate the turning direction of the vehicle, the driving direction indicating unit 200 may be disposed on both sides of the front or back of the vehicle. To indicate the reversing of the vehicle, the driving direction indicating unit 200 may be disposed on both sides of the back of the vehicle. In addition, driving direction indicating units 200 may be disposed to respectively indicate the turning direction and reversing of the vehicle, or driving direction indicating unit 200 may be used to indicate any one of the turning direction and reversing of the vehicle according to the driving direction of the vehicle.

FIG. 2 is an exemplary schematic diagram illustrating a driving direction indicating unit 200 according to a first exemplary embodiment. Referring to FIG. 2, the driving direction indicating unit 200 according to the first exemplary embodiment may indicate the turning direction of a vehicle. In FIG. 2, when the driving direction indicating unit 200 is disposed on a side of a headlamp 10 of the vehicle to indicate the turning direction of the vehicle will be described as an example. The driving direction indicating unit 200 may be disposed on both sides of the front or back of the vehicle. In FIG. 2, the driving direction indicating unit 200 disposed on any one of both sides of the front of the vehicle is illustrated as an example. However, the driving direction indicating unit 200 may also be disposed on the other side of the front of the vehicle in the same way, except for the installation position or direction.

The driving direction indicating unit 200 according to the first exemplary embodiment may include a first lamp module 210 and a second lamp module 220. In FIG. 2, the first lamp module 210 and the second lamp module 220 may be disposed in a vertical direction is described as an example. However, the present disclosure is not limited to this example, and the direction in which the first lamp module 210 and the second lamp module 220 are disposed may vary according to the layout of the automotive lamp 1. In the driving direction indicating unit 200 according to the first exemplary embodiment, the first lamp module 210 may, as illustrated in FIG. 3, form a flashing pattern P which may be incrementally illuminated (e.g., flash) on and off when the vehicle turns left or right at a crossroads or when the vehicle changes lanes. Additionally, the second lamp module 220 may be coupled with the first lamp module 210 and when the first lamp module 210 operates, may be configured to as illustrated in FIG. 3, form a road pattern P2 on a road surface around the vehicle (e.g., proximate to or surrounding, encompassing the vehicle) to indicate the turning direction of the vehicle.

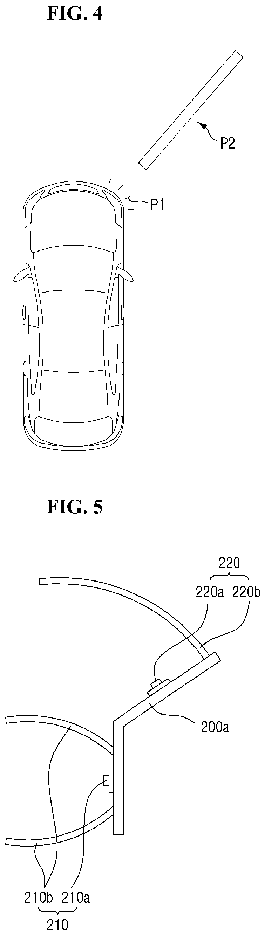

In FIG. 3, a case where the road pattern P2 includes a plurality of light irradiation patterns P21 through P23 is described as an example. However, the present invention is not limited to this example, and the road pattern P2 may also include a single light irradiation pattern as illustrated in FIG. 4. In the first exemplary embodiment, both the first lamp module 210 and the second lamp module 220 may be used to indicate the turning direction of the vehicle. Therefore, light of the same color may be irradiated. In particular, the first lamp module 210 and the second lamp module 220 share the same lens (e.g., an outer lens).

In the first exemplary embodiment, a case where the first lamp module 210 and the second lamp module 220 share the same lens is described. In other words, in the automotive lamp 1 of the present invention, a plurality of lamps (e.g., a headlamp and a position lamp) used for various purposes as well as the driving direction indicating unit 200 may respectively be disposed in a plurality of separate cavities. A plurality of lenses respectively corresponding to the cavities may be integrally formed with the lamps and the driving direction indicating unit 200 in the cavities by a double injection process.

In other words, when an installation gap between the first lamp module 210 and the second lamp module 220 is relatively large, a lens may be formed for each of the first lamp module 210 and the second lamp module 220. This may increase a lens manufacturing or assembly process. Therefore, in the first exemplary embodiment, to ensure the convenience of the lens injection or assembly and manufacturing process while preventing the degradation of the exterior design of the automotive lamp 1 according to the present invention, the installation gap between the first lamp module 210 and the second lamp module 220 may be less than 75 mm and the first lamp module 210 and the second lamp module 220 are disposed in a cavity corresponding to the same lens.

In other words, since the driving direction indicating unit 200 according to the first exemplary embodiment indicates the turning direction of the vehicle, it may usually be disposed in a cavity corresponding to a lens having a yellowish color. However, the present invention is not limited to this case, and light irradiated from each of the first lamp module 210 and the second lamp module 220 may have a required color. In this case, a transparent lens may be used. In addition, the first lamp module 210 and the second lamp module 220 may be disposed adjacent enough to share the same lens. In particular, the first lamp module 210 and the second lamp module 220 may be disposed together on a common substrate or may be placed within the same lamp housing.

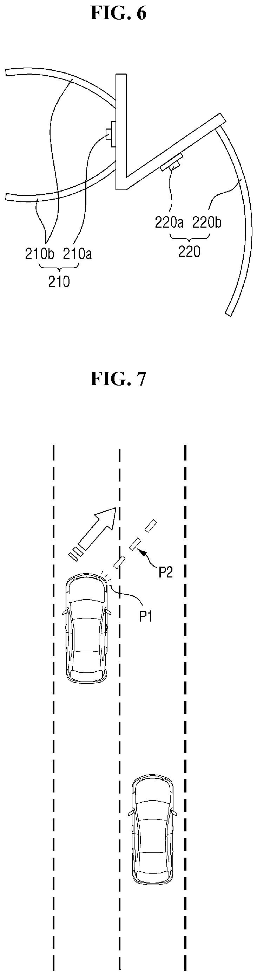

For example, the first lamp module 210 and the second lamp module 220 may be disposed on a common substrate 200a as illustrated in FIGS. 5 and 6. In FIGS. 5 and 6, a case where the first lamp module 210 includes a light source 210a and a reflector 210b and where the second lamp module 220 includes a light source 220a and a reflector 220b is described as an example. However, when the first lamp module 210 and the second lamp module 220 are direct-light-type lamps, the reflectors 210 and 220b may be omitted. The light source 220a and the reflector 220b of the second lamp module 220 illustrated in FIGS. 5 and 6 may be included in any one of a plurality of light source units 221 through 223 of the second lamp module 220 which will be described later. The light source 220a and the reflector 220b may also be included in the other ones of the light source units 221 through 223 of the second lamp module 220 in the same way, except for the installation position or direction.

In FIGS. 5 and 6, the first lamp module 210 and the second lamp module 220 may be arranged in a vertical or horizontal direction but not on the same line. This is intended to prevent light irradiated from the first lamp module 210 and light irradiated from the second lamp module 220 from interfering with each other. When the first lamp module 210 and the second lamp module 220 are disposed on the common substrate 200a, the structure of the automotive lamp 1 may be simplified, and costs may be saved.

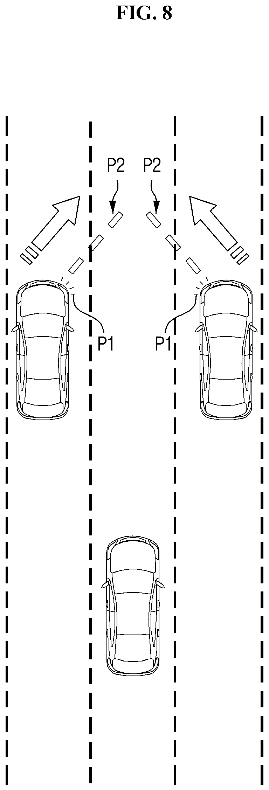

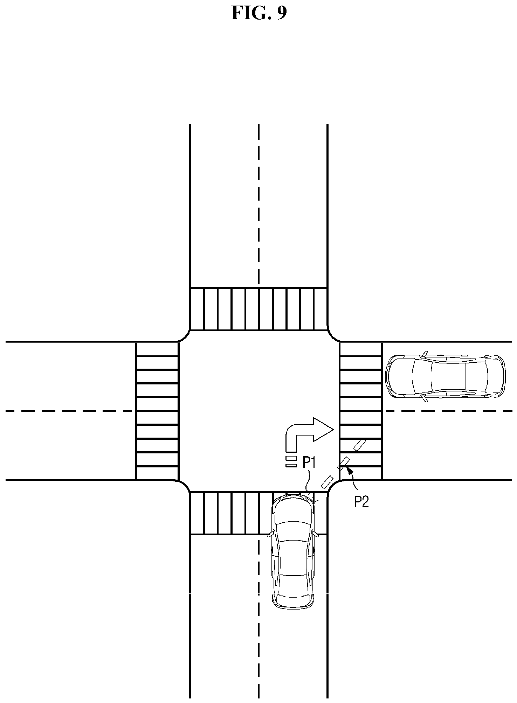

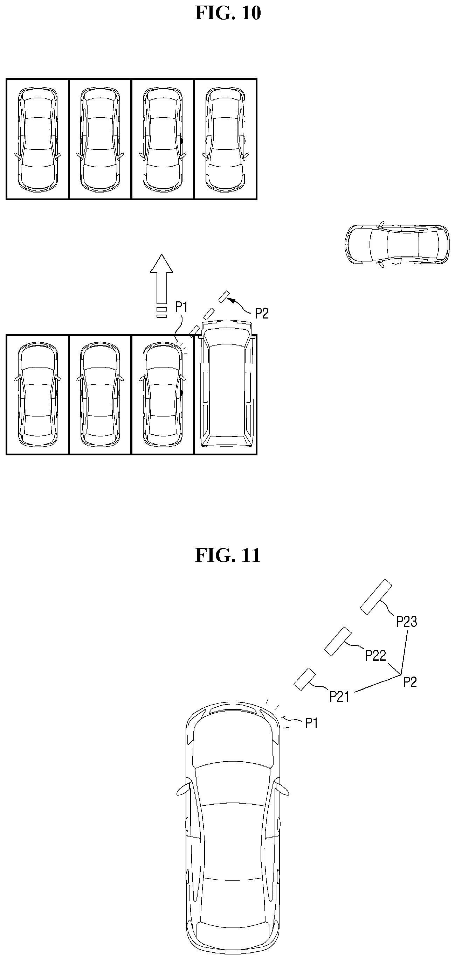

In the first exemplary embodiment, a case where the light irradiation patterns P21 through P23 are located on a straight line extending in a specific direction from the vehicle is described. However, the arrangement direction of the light irradiation patterns P21 through P23 may vary. The flashing pattern P1 and the road pattern P2 may be formed when the vehicle tries to change its driving direction, for example, when the vehicle changes lanes as illustrated in FIGS. 7 and 8, turns left or right at a crossroads as illustrated in FIG. 9, or drives forward to move out of an area in a parking lot as illustrated in FIG. 10. The flashing pattern P1 and the road pattern P2 indicate the driving direction of the vehicle to other vehicles or pedestrians coming from the turning direction of the vehicle.

In FIG. 8, a case where a plurality of vehicles driving in different lanes are attempting to move to the same lane is illustrated as an example. In this case, each of the vehicles attempting to move to the same lane may form the road pattern P2 so that the driver of each vehicle may recognize the vehicles trying to move to the same lane. This may prevent a car accident. In the first exemplary embodiment, the light irradiation patterns P21 through P23 may have the same or different sizes or shapes.

In FIG. 3, a case where the light irradiation patterns P21 through P23 have the same size is described as an example. However, the light irradiation patterns P21 through P23 may also have different sizes as illustrated in FIG. 11. In the first exemplary embodiment, a case where the driving direction indicating unit 220 disposed on any one of both sides of the front of the vehicle indicates the driving direction of the vehicle is described. However, at least one of the driving direction indicating units 200 respectively disposed on both sides of the front or back of the vehicle may also form the flashing pattern P1 and the road pattern P2 of the first exemplary embodiment according to the driving direction of the vehicle.

Referring back to FIG. 2, in the first exemplary embodiment, the second lamp module 220 may include a plurality of light source units 221 through 223 to form a plurality of light irradiation patterns P21 through P23, and each of the light source units 221 through 223 may include the light source 220a and the reflector 220b illustrated in FIGS. 5 and 6. Each of the light source units 221 through 223 may be disposed at a different height or angle based on a position at which it forms a light irradiation pattern. For example, of the light source units 221 through 223, a light source unit which forms a light irradiation pattern located closest to the vehicle may be disposed at a lowest height from the ground, or an angle formed by an optical axis of the light source unit and the ground may be the greatest. In addition, a light source unit which forms a light irradiation pattern located farthest from the vehicle may be disposed at a highest height from the ground, or an angle formed by an optical axis of the light source unit and the ground may be smallest.

In the first exemplary embodiment, a plurality of light sources units 221 through 223 may be used to form a plurality of light irradiation patterns P21 through P23. However, the number of light source units which form light irradiation patterns may vary based on the number of light irradiation patterns. The second lamp module 220 according to the first exemplary embodiment may have a preset horizontal light irradiation angle with respect to a centerline of the vehicle and has a preset vertical light irradiation angle with respect to the road surface. The second lamp module 220 may have a horizontal light irradiation angle of about 0 to 45 degrees and has a vertical light irradiation angle of about 15 to 45 degrees.

In the first exemplary embodiment, a case where the second lamp module 220 has a horizontal light irradiation angle of 20 to 45 degrees and a vertical light irradiation angle of 15 to 45 degrees will be described. In the first exemplary embodiment, the second lamp module 220 may have a horizontal light irradiation angle of about 20 to 45 degrees and has a vertical light irradiation angle of about 15 to 45 degrees in view of visibility of nearby vehicles or pedestrians.

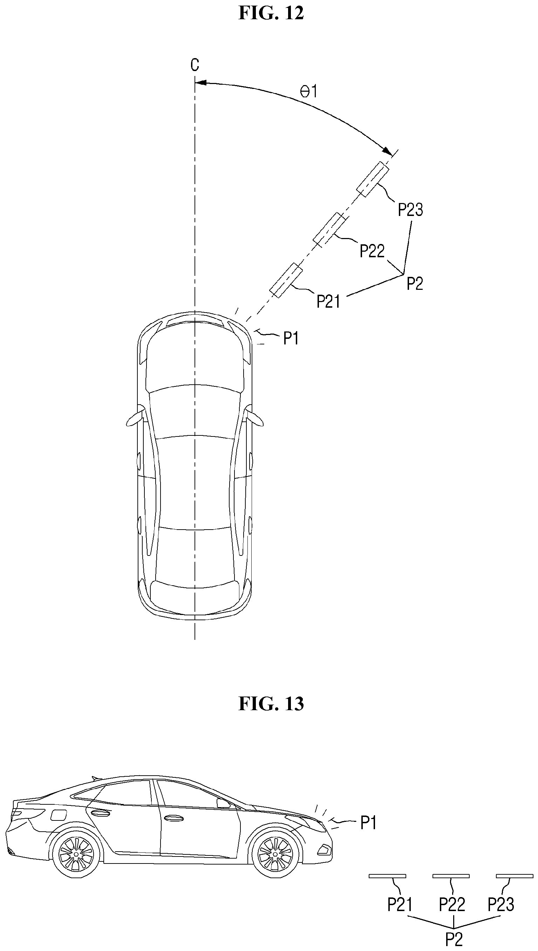

For example, when the vehicle attempts to turn right at a crossroads as illustrated in FIG. 12, the first lamp module 210 of the driving direction indicating unit 200 disposed on a front right side of the vehicle may form the flashing pattern P1 and at the same time, the second lamp module 220 of the driving direction indicating unit 200 may form the road pattern P2 at a certain horizontal light irradiation angle θ1 to a centerline C of the vehicle in view of a maximum rotation angle by which the vehicle may be rotated.

In other words, when the horizontal light irradiation angle θ1 formed by the road pattern P2 and the centerline C of the vehicle is less than 20 degrees, the road pattern P2 may look similar to lanes on the road. Therefore, when a vehicle or pedestrian coming from a right turn lane looks at the road pattern P2 from a side of the vehicle, it may be difficult to recognize the directionality of the road pattern P2 as illustrated in FIG. 13. Accordingly, the road pattern P2 may be formed at the horizontal light irradiation angle θ1 of greater than about 20 degrees to the centerline C of the vehicle, so that nearby vehicles or pedestrians may recognize the road pattern P2.

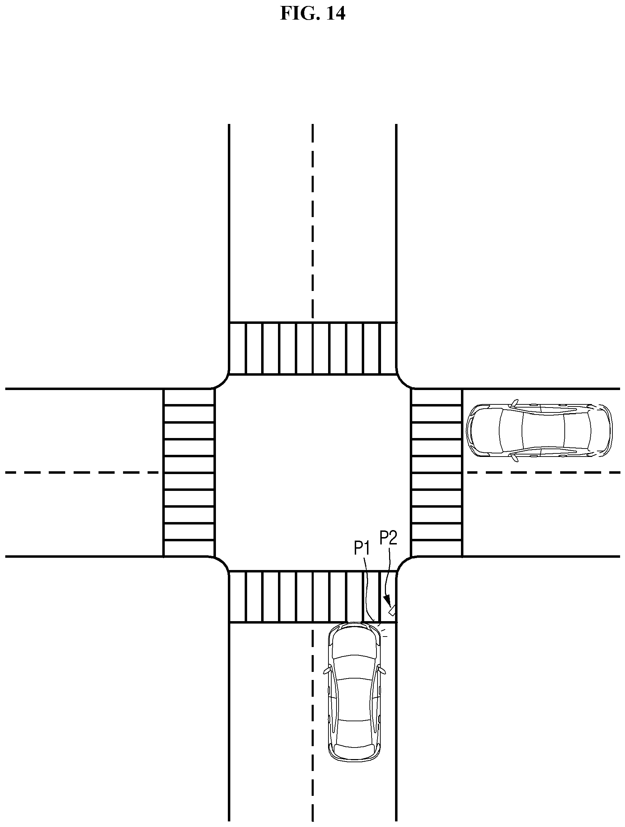

Additionally, since the rotation angle of the wheels of the vehicle is about 30 to 40 degrees when the handle of the vehicle is rotated to the maximum, the horizontal light irradiation angle θ1 may be less than 45 degrees which is the maximum rotation angle of the vehicle. When the horizontal light irradiation angle θ1 of the road pattern P2 is greater than 45 degrees, the road pattern P2 may be hidden by an obstacle (such as a building or a vehicle) located adjacent to the vehicle as illustrated in FIG. 14. In addition, when a large vehicle is parked proximate to the vehicle as illustrated in FIG. 10, the road pattern P2 may be formed on the large vehicle. Therefore, it is difficult to inform nearby vehicles or pedestrians of the driving direction of the vehicle. For example, the horizontal light irradiation angle θ1 formed by the road pattern P2 and the centerline C of the vehicle may be in the range of about 20 to 45 degrees.

In addition, when a plurality of vehicles driving in different lanes move to the same lane as illustrated in FIG. 8, the horizontal light irradiation angle θ1 formed by the road pattern P2 and the centerline C of each of the vehicles may be less than 45 degrees in view of a viewing angle of each driver. Only then may each driver easily recognize the vehicles moving to the same lane.

In the first exemplary embodiment, the horizontal light irradiation angle θ1 of the second lamp module 220 is in the range of 20 to 45 degrees as described above. However, this is merely an example used to help understand the present invention, and the present invention is not limited to this example. That is, the second lamp module 220 may have the horizontal light irradiation angle θ1 of about 0 to 45 degrees according to the road environment such as the type of the road, lane width, the position of an obstacle, etc. In an example, the second lamp module 220 may have various horizontal light irradiation angles θ1 such as about 0 to 45 degrees, about 5 to 45 degrees, about 10 to 45 degrees and about 20 to 45 degrees according to the road environment. In other words, the horizontal light irradiation angle θ1 of the second lamp module 220 may be greater than 0 degrees for the following reason. When each of two adjacent vehicles forms the road pattern P2, when the horizontal light irradiation angle θ1 is less than 0 degrees, the road pattern P2 may be irradiated toward the interior of the vehicle. Therefore, the road pattern P2 formed by any one of the two adjacent vehicles may cause confusion. To prevent this problem, the horizontal light irradiation angle θ1 of the second lamp module 220 may be greater than 0 degrees.

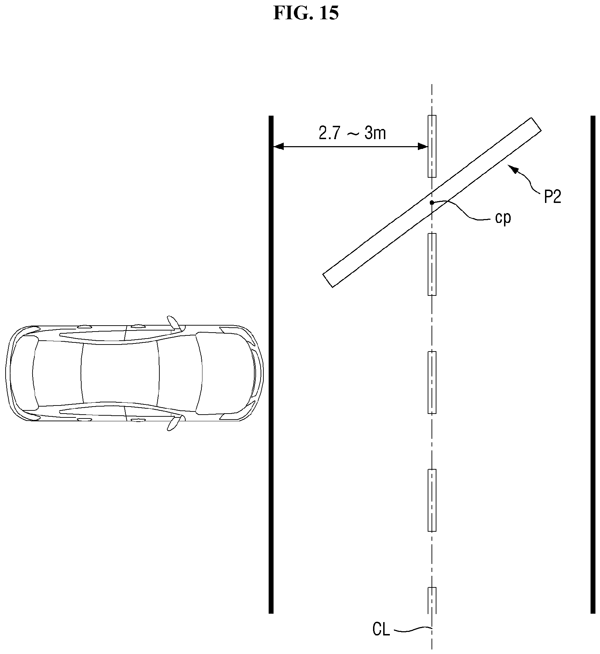

When a vehicle parked near the boundary line of a road tries to drive forward onto the road, the road pattern P2 may be formed on a centerline of the road or over the centerline of the road. In particular, it may be difficult for nearby vehicles or pedestrians to recognize which vehicle is to drive out onto the road. Therefore, as illustrated in FIG. 15, a central part CP of the road pattern P2 may be formed at a distance of about 2.7 to 3 meters (e.g., at which a road centerline CL is formed) from an axis which perpendicularly intersects a lengthwise direction of the vehicle at a front end of the vehicle. In other words, the reason why the central part CP of the road pattern P2 is formed at a distance of about 2.7 to 3 meters from the axis which perpendicularly intersects the lengthwise direction of the vehicle at the front end of the vehicle is that a minimum width of a vehicle may be generally 2.7 to 3 meters. When the width of the vehicle changes the distance from the axis to the central part CP of the road pattern P2 may also be adjusted.

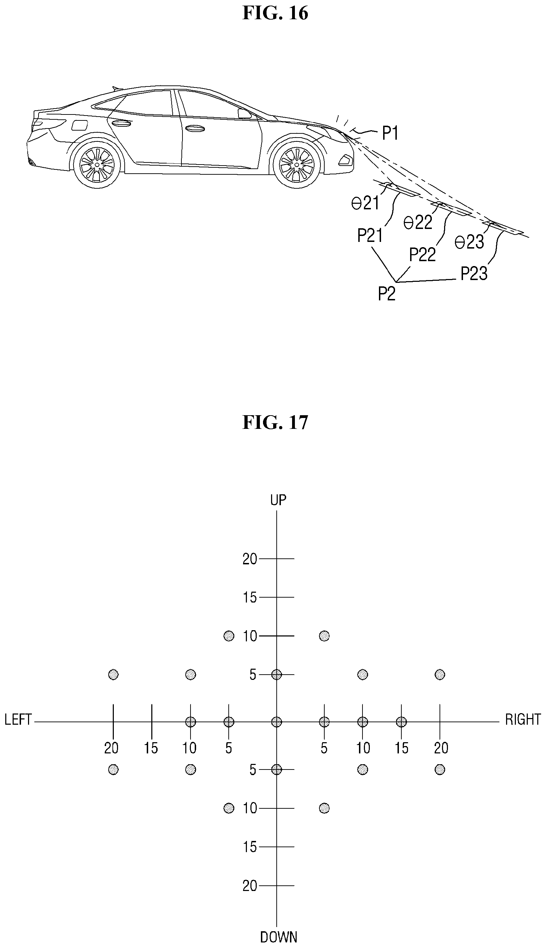

In FIG. 15, a case where the road pattern P2 includes a single light irradiation pattern is illustrated as an example. However, the present invention may be applied similarly to a case where the road pattern P2 includes a plurality of light irradiation patterns. Therefore, in the first exemplary embodiment, the horizontal light irradiation angle θ1 of the second lamp module 220 may be in the range of about 20 to 45 degrees to enable nearby vehicles or pedestrians coming from the turning direction of the vehicle to more easily recognize the directionality of the road pattern P2 when viewing the road pattern P2 from a side of the vehicle as illustrated in FIG. 16. Accordingly, a situation may be prevented where nearby vehicles or pedestrians are unable to recognize the road pattern P2 when the road pattern P2 is hidden by an obstacle.

In the first exemplary embodiment, when the second lamp module 220 has a vertical light irradiation angle of about 15 to 45 degrees, it means that an angle θ21, θ22 or θ23 formed by an optical axis of each of the light source units 221 through 223 and the road surface may be in the range of about 15 to 45 degrees as illustrated in FIG. 16. It may also be understood that an angle formed by the optical axis of a light source unit, which forms a light irradiation pattern located closest to the vehicle, and the ground is less than 45 degrees and that an angle formed by the optical axis of a light source unit, which forms a light irradiation pattern located farthest from the vehicle, and the ground may be greater than 15 degrees.

In the first exemplary embodiment, the flashing pattern P1 formed by the first lamp module 210 may be irradiated at an angle of up to about 10 degrees in the vertical direction as illustrated in FIG. 17. Therefore, to not interfere with light irradiated from the first lamp module 210, the second lamp module 220 may have vertical light irradiation angles θ21 through θ23 of greater than about 15 degrees which is different from the vertical light irradiation angle of the first lamp module 210 by about 5 degrees. When the vertical light irradiation angles θ21 through θ23 of the second lamp module 220 are greater than about 45 degrees, light irradiation may be limited by a structure such as a front or rear bumper of the vehicle or a housing in the lamp. Therefore, the vertical light irradiation angles θ21 through θ23 is less than 45 degrees. In addition, when the vertical light irradiation angles θ21 through θ23 of the second lamp module 220 are greater than about 45 degrees, the road pattern P2 may be formed at a location proximate to the vehicle. In particular, it may be difficult for nearby vehicles or pedestrians to recognize the driving direction of the vehicle. Therefore, the vertical light irradiation angles θ21 through θ23 are less than about 45 degrees.

In the first exemplary embodiment, the vertical light irradiation angles θ21 through θ23 of the second lamp module 220 may vary based on an angle at which the flashing pattern P1 is formed in the vertical direction by the first lamp module 210, the structure of a structure such as the front or rear bumper of the vehicle or the housing in the lamp, etc. Therefore, since the horizontal light irradiation angle of the second lamp module 220 may be about 20 to 45 degrees and the vertical light irradiation angle of the second lamp module 220 is about 15 to 45 degrees in the first exemplary embodiment, vehicles or pedestrians around the vehicle may easily recognize the turning direction of the vehicle based on the road pattern P2 and cope with the situation.

In the driving direction indicating unit 200 according to the first exemplary embodiment, the luminous intensity of the second lamp module 220 is greater than that of the first lamp module 210. This is because the second lamp module 220 may irradiate light to a relatively large distance from the vehicle. When the luminous intensity of the second lamp module 220 is less than that of the first lamp module 210, it may difficult for the road pattern P2 to provide sufficient brightness. In the first exemplary embodiment, the second lamp module 220 may have a brightness of about 4,300 to 13,000 cd in view of the surrounding environment such as ambient brightness.

For example, in the early evening when it is required to indicate the turning direction of the vehicle using the road pattern P2 due to reduced visibility, the illuminance of a road under natural lighting may be approximately 100 lux. The illuminance of the road may be greatest in the early evening among situations that require the road pattern P2. In the early evening, the road pattern P2 may have a brightness of at least 200 lux or greater to be visible enough to be distinguished from the surrounding road surface. In particular, the second lamp module 220 may have a luminous intensity of at least 4,300 cd or more. For example, considering illuminance standards of underground parking lots and street lamps, maximum illuminance of the road, i.e., the road surface may be approximately 100 lux. Therefore, the road pattern P2 may have a brightness of at least 200 lux or greater to be visible enough to be distinguished from the surrounding road surface.

In other words, when the second lamp module 220 has a luminous intensity of at least 4,300 cd or greater, it may be understood that a light irradiation pattern formed at a largest distance from the vehicle may have an illuminance of at least 200 lux or more. For example, given that the luminous intensity of the second lamp module 220 may be similar, light irradiated to a road surface at a greater distance from the vehicle has minimum illuminance. When the driving direction indicating unit 220 irradiates light at a vertical light irradiation angle of 15 degrees from a maximum installation height of 1,200 mm, the distance from the driving direction indicating unit 220 to the road surface is approximately 4,636 mm. In this distance, minimum luminous intensity (a value obtained by multiplying illuminance and the square of distance (m)) for securing an illuminance of 200 lux or more may have a value greater than approximately 4,300 cd.

In other words, the maximum installation height of the driving direction indicating unit 200 may be understood as an installation height of a light source unit which is disposed at a highest position among the light source units 221 through 223 included in the driving direction indicating unit 220. In the first exemplary embodiment, the maximum installation height of the driving direction indicating unit 200 may be understood as the installation height of the third light source unit 223. In addition, the reason why the maximum installation height of the driving direction indicating unit 220 is 1,200 mm is that when the installation height of the driving direction indicating unit 220 is greater than 1,200 mm, the road pattern P2 is formed outside the viewing angle of a driver, thereby reducing its visibility.

In addition, when the luminous intensity of the second lamp module 220 is high, the road pattern P2 may be reflected, thus obstructing the field of vision (e.g.,dazzling) proximate vehicles or pedestrians. Therefore, the luminous intensity of the second lamp module 220 may be less than about 13,000 cd. For example, since light reflected by a rainy road may dazzle nearby vehicles or pedestrians, the luminous intensity of the second lamp module 220 may be less than 13,000 cd.

In the first exemplary embodiment, a case where the luminous intensity of the second lamp module 220 is in the range of 4,300 to 13,000 cd is described. However, this is merely an example used to help understand the present invention, and the present invention is not limited to this example. When the second lamp module 220 includes a plurality of light source units 221 through 223 such that the road pattern P2 includes a plurality of light irradiation patterns P21 through P23, it may be more advantageous to have a smaller difference between minimum luminous intensity and maximum luminous intensity. This is because when there is a substantial difference in brightness between beams of light generated by the light source units 221 through 223, the brightness of light may appear uneven when the automotive lamp 1 is seen from the exterior. This may degrade the exterior design of the automotive lamp 1. Therefore, to secure sufficient visibility of the road pattern P2 while preventing the road pattern P2 from dazzling nearby vehicles or pedestrians and prevent degradation of the exterior design of the automotive lamp 1, the second lamp module 220 may have a luminous intensity of about 5,000 to 10,000 cd, more preferably, about 5,500 to 8,500 cd

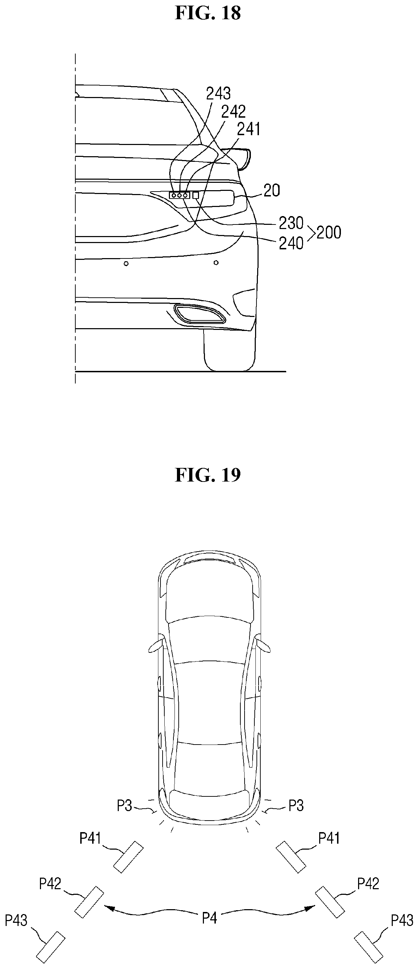

The first exemplary embodiment described above is a case where the driving direction indicating unit 200 indicates the turning direction of the vehicle. A case where the driving direction indicating unit 200 indicates the reversing of the vehicle will now be described below. FIG. 18 is an exemplary schematic diagram illustrating a driving direction indicating unit 200 according to a second exemplary embodiment. Referring to FIG. 18, the driving direction indicating unit 200 according to the second exemplary embodiment may indicate the reversing of a vehicle. In the second exemplary embodiment, a case where the driving direction indicating unit 200 is disposed on both sides of the back of the vehicle to indicate the reversing of the vehicle will be described.

The driving direction indicating unit 200 according to the second exemplary embodiment may be disposed on a side of a tail lamp 20 of the vehicle. As in the first exemplary embodiment described above, the driving direction indicating unit 200 may include a first lamp module 230 and a second lamp module 240. In FIG. 18, a case where the first lamp module 230 and the second lamp module 240 are disposed in the horizontal direction is described as an example. However, the present invention is not limited to this example, and the direction in which the first lamp module 230 and the second lamp module 240 are disposed may vary according to the layout of the automotive lamp 1.

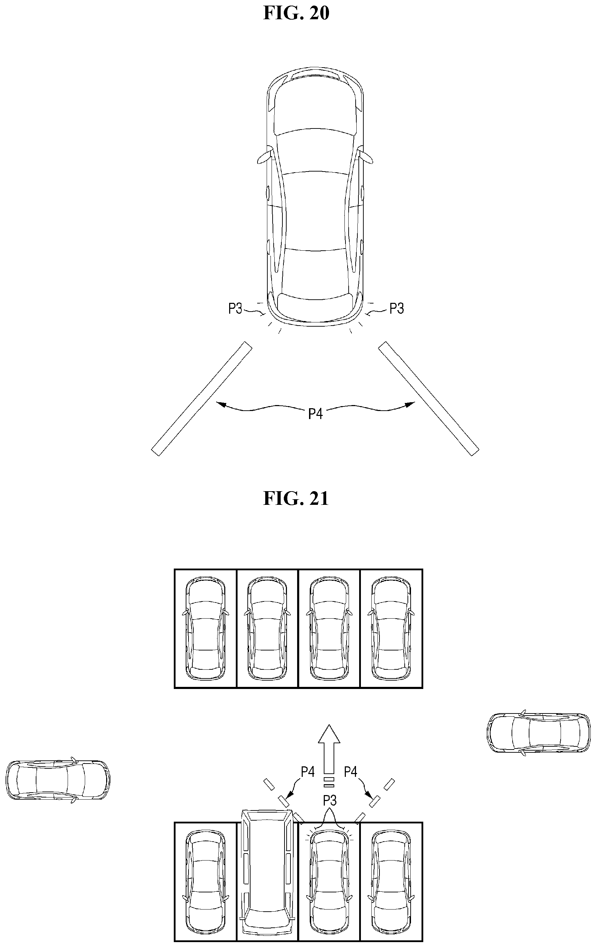

In the driving direction indicating unit 200 according to the second exemplary embodiment, the first lamp module 230 may be turned on to form a lighting pattern P3 as illustrated in FIG. 19 when the vehicle performed a reverse motion, (e.g., backing up in a parking lot) and the second lamp module 240 may be coupled to the first lamp module 230 to form a road pattern P4 to indicate the reverse motion of the vehicle. In the second exemplary embodiment, a case where the road pattern P4 includes a plurality of light irradiation patterns P41 through P43 formed by a plurality of light source units 241 through 243 included in the second lamp module 240 is described. However, the road pattern P4 may also include a single light irradiation pattern as illustrated in FIG. 20.

In the second exemplary embodiment, the first lamp module 230 and the second lamp module 240 may be disposed with a distance of less than about 75 mm between them to share the same lens for similar reasons to the reasons described above in the first exemplary embodiment. The road pattern P4 formed by the second lamp module 240 may include at least one light irradiation pattern and the number of light sources that form light irradiation patterns may vary based on the number of light irradiation patterns included in the road pattern P4. In other words, the driving direction indicating unit 200 according to the second exemplary embodiment may be disposed on the back of the vehicle. On the back of the vehicle, a plurality of lamps (e.g., a tail lamp, a brake lamp, and a position lamp) used for various purposes as well as the driving direction indicating unit 200 may respectively be disposed in a plurality of separate cavities, and the first lamp module 230 and the second lamp module 240 may be disposed together in any one of the cavities to share the same lens.

In the second exemplary embodiment, a case where the first lamp module 230 and the second lamp module 240 share the same lens is described. In addition, since the driving direction indicating unit 200 according to the second exemplary embodiment indicates the reversing of the vehicle, it may usually use a lens having a color such as white, blue, or yellow. However, the present invention is not limited to this case, and light irradiated from each of the first lamp module 230 and the second lamp module 240 may have a required color. In this case, a transparent lens may be used. In the second exemplary embodiment, the first lamp module 230 and the second lamp module 240 may be disposed on a common substrate as in FIGS. 5 and 6 described above. In this case, the structure of the automotive lamp 1 may be simplified, and costs may be saved.

As illustrated in FIGS. 19 and 20, the road pattern P4 may be formed by the driving direction indicating units 200 respectively disposed on both sides of the back of the vehicle. Therefore, when the vehicle reverses (e.g., in a parking lot), other vehicles approaching the vehicle from the left or right side may easily recognize the reversing motion of the vehicle as illustrated in FIG. 21. In addition, when a large vehicle is parked proximate to the vehicle as illustrated in FIG. 21, other vehicles may not be able to see the reversing vehicle. Even in this case, other vehicles may recognize the reversing motion of the vehicle through the road pattern P4 and may adjust to this situation in advance. In the second exemplary embodiment, as in the first exemplary embodiment, the light irradiation patterns P41 through P43 of the road pattern P2 may be arranged at predetermined intervals on a straight line extending in a specific direction from the vehicle. However, the arrangement direction of the light irradiation patterns P41 through P43 may vary.

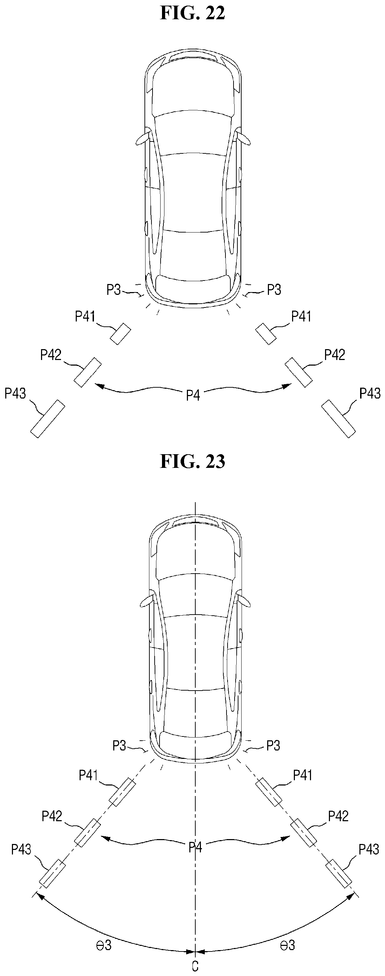

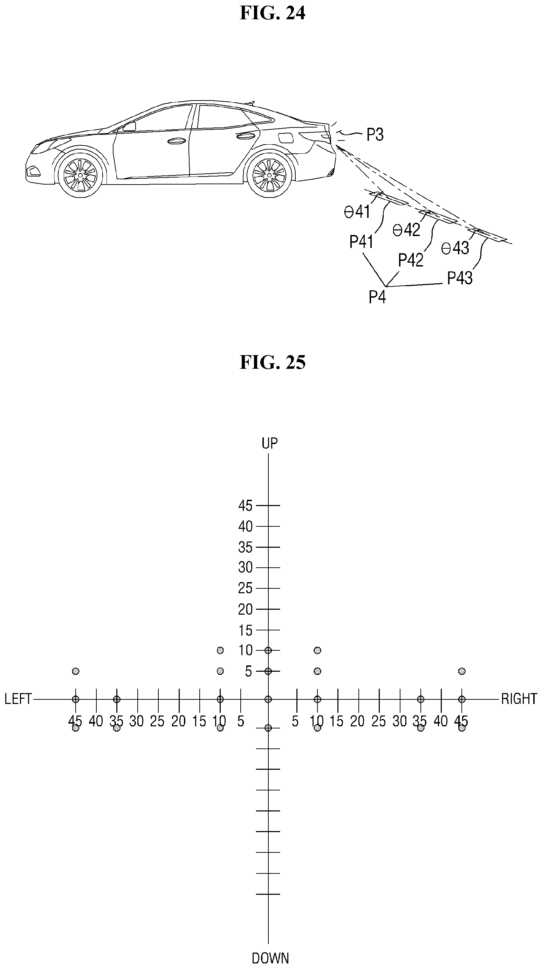

In addition, in FIG. 19, a case where the light irradiation patterns P41 through P43 of the road pattern P4 indicating the reversing of the vehicle have the same size is described as an example. However, the light irradiation patterns P41 through P43 may have not only different sizes as illustrated in FIG. 22 but also the same or different shapes. In the second exemplary embodiment, the second lamp module 240 may have a luminous intensity of about 4,300 to 13,000 cd for similar reasons to the reasons described above in the first exemplary embodiment and may have a horizontal light irradiation angle θ3 of about 20 to 45 degrees and vertical light irradiation angles θ41 through θ43 of about 15 to 45 degrees as illustrated in FIGS. 23 and 24.

In the second exemplary embodiment, as in the first exemplary embodiment, the second lamp module 240 has the horizontal light irradiation angle θ3 of about 20 to 45 degrees in view of visibility of nearby vehicles or pedestrians according to a range in which the vehicle may be rotated, an obstacle located adjacent to the vehicle, the size of the nearby vehicles, etc. In addition, the second lamp module 240 has the vertical light irradiation angles θ41 through θ43 of greater than about 15 degrees because the first lamp module 230 may be configured to irradiate light at an angle of up to about 10 degrees in the vertical direction as illustrated in FIG. 25. In particular, to prevent interference with light irradiated from the first lamp module 230, the second lamp module 240 has the vertical light irradiation angles θ41 through θ43 of greater than about 15 degrees which is different from the vertical light irradiation angle of the first lamp module 230 by 5 degrees. In addition, the vertical light irradiation angles θ41 through θ43 of the second lamp module 240 is less than 45 degrees to prevent light irradiation from being limited by a structure such as a front or rear bumper of the vehicle or a housing in the lamp and to prevent the road pattern P4 from being formed at a location proximate to the vehicle, making it difficult to recognize the driving direction of the vehicle.

For example, when the horizontal light irradiation angle θ3 of the second lamp module 240 according to the second exemplary embodiment is less than about 20 degrees, the road pattern P4 may look similar to lanes on the road. Therefore, when a nearby vehicle or pedestrian views the road pattern P4 from a side of the vehicle, it may be difficult to recognize the directionality of the road pattern 4. When the horizontal light irradiation angle θ3 of the second lamp module 240 is greater than about 45 degrees, the road pattern P4 may be hidden by an obstacle positioned adjacent to the vehicle. In addition, when a large vehicle is parked proximate to the vehicle as illustrated in FIG. 21, when the horizontal light irradiation angle θ3 of the road pattern P4 is greater than about 45 degrees, it is difficult to inform nearby vehicles or pedestrians of the driving direction of the vehicle. For this reason, an angle formed by the road pattern P4 and a centerline C of the vehicle may be in the range of about 20 to 45 degrees.

In the second exemplary embodiment, a case where the second lamp module 240 has a luminous intensity of about 4,300 to 13,000 cd and has the horizontal light irradiation angle θ3 of about 20 to 45 degrees and the vertical light irradiation angles θ41 through θ43 of 15 to 45 degrees as illustrated in FIGS. 23 and 24 is described. However, for similar reasons to the reasons described above in the first exemplary embodiment, the second lamp module 240 may also have various horizontal light irradiation angles θ3, at about 0 to 45 degrees, about 5 to 45 degrees, about 10 to 45 degrees and about 20 to 45 degrees, and various vertical light irradiation angles θ41 through θ43 at about 15 to 45 degrees.

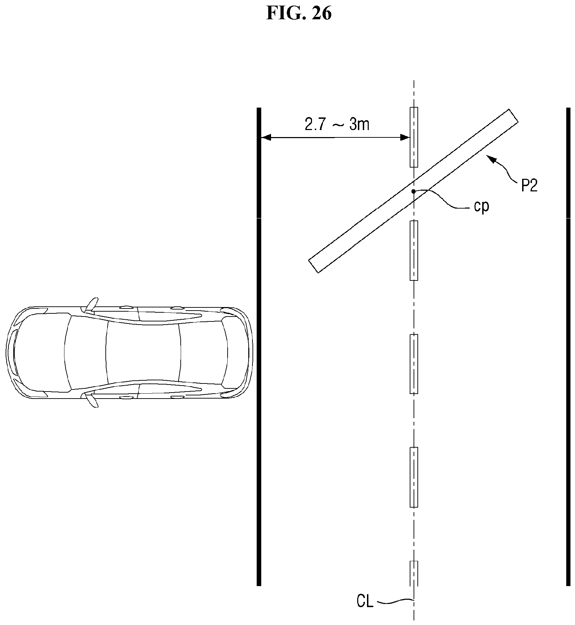

In addition, to secure sufficient visibility of the road pattern P4 while preventing the road pattern P4 from dazzling nearby vehicles or pedestrians and prevent degradation of the exterior design of the automotive lamp 1, the second lamp module 240 according to the second exemplary embodiment may have a luminous intensity of about 5,000 to 10,000 cd, more preferably, about 5,500 to 8,500 cd. When a vehicle parked proximate to the boundary line of a road attempts to drive backward onto the road, the road pattern P4 may be formed on a centerline of the road or over the centerline of the road. In particular, it may be difficult for nearby vehicles or pedestrians to recognize which vehicle is to drive out onto the road. Therefore, as illustrated in FIG. 26, a central part CP of the road pattern P4 may be formed at a distance of 2.7 to 3 meters (e.g., at which a road centerline CL is formed) from an axis which perpendicularly intersects a lengthwise direction of the vehicle at a rear end of the vehicle.

In other words, when the central part CP of the road pattern P4 is formed at a distance of 2.7 to 3 meters from the axis which perpendicularly intersects the lengthwise direction of the vehicle at the rear end of the vehicle a minimum width of a vehicle may be about 2.7 to 3 meters. When the width of the vehicle changes the distance from the axis to the central part CP of the road pattern P4 may also change.

In FIG. 26, a case where the road pattern P4 includes a single light irradiation pattern is illustrated as an example. However, the present disclosure may be applied similarly to a case where the road pattern P4 includes a plurality of light irradiation patterns. In the second exemplary embodiment, the luminous intensity of the second lamp module 240 may be equal to or greater than that of the first lamp module 230. This is because the second lamp module 240 needs to irradiate light to a relatively large distance from the vehicle. When the luminous intensity of the second lamp module 240 is less than that of the first lamp module 230, it is difficult for the road pattern P4 to provide sufficient brightness (e.g., luminosity).

In the second exemplary embodiment, as in the first exemplary embodiment, the luminous intensity of the second lamp module 240 may be greater than about 4,300 cd to make the road pattern P4 have sufficient visibility, i.e., an illuminance of 200 lux when maximum illuminance of a road surface in an underground parking lot or under a street lamp is 100 lux. In addition, the luminous intensity of the second lamp module 240 may be less than 13,000 cd to prevent the road pattern P4 from dazzling proximate vehicles or pedestrians. In the first and second exemplary embodiments described above, the cases where the driving direction indicating unit 200 indicates the turning direction and reversing of the vehicle are described, respectively. However, these are merely examples used to help understand the present invention, and the driving direction indicating unit 200 disposed on at least one side of the front or back of the vehicle may also indicate both the turning direction and reversing of the vehicle. For example, the driving direction indicating unit 200 disposed on both sides of the back of the vehicle may be used to indicate both the turning direction and reversing of the vehicle.

Referring back to FIG. 1, the control unit 300 according to the exemplary embodiment may be configured to adjust the driving direction indicating unit 200 to indicate the driving direction or reversing of the vehicle based on the sensing result of the driving direction sensing unit 100. In the exemplary embodiment, the control unit 300 may couple the first lamp modules 210 and 230 included in the driving direction indicating units 200 of the first and second exemplary embodiments to the second lamp modules 220 and 240 respectively corresponding to the first lamp modules 210 and 230. In the exemplary embodiment, a case where the driving direction sensing unit 100 is configured to sense the manipulation of a turn signal switch according to the turning direction of the vehicle and senses a reverse gear R according to the reversing of the vehicle and where the control unit 300 is configured to operate the first lamp modules 210 and 230 and the second lamp modules 220 and 240 together based on the sensing result of the driving direction sensing unit 100 will be described.

For example, when the turning direction or reversing of the vehicle is sensed, the control unit 300 may simultaneously turn the first lamp module 210 or 230 and the second lamp module 220 or 240 on or off. When the breakdown of the first lamp module 210 or 230 is sensed and at least one light source included in the first lamp module 210 or 230 is turned off due to the breakdown, the control unit 300 may be configured to turn the second lamp module 220 or 240 off. In other words, the control unit 300 may be configured to adjust both a pattern formed by the first lamp module 210 or 230 included in the driving direction indicating unit 200 of each of the first and second exemplary embodiments and a pattern formed by the second lamp module 220 or 240 to remain lit or keep flashing on and off (e.g., Intermittent illumination) or control at least one of the patterns to remain lit and the other pattern to keep flashing on and off.

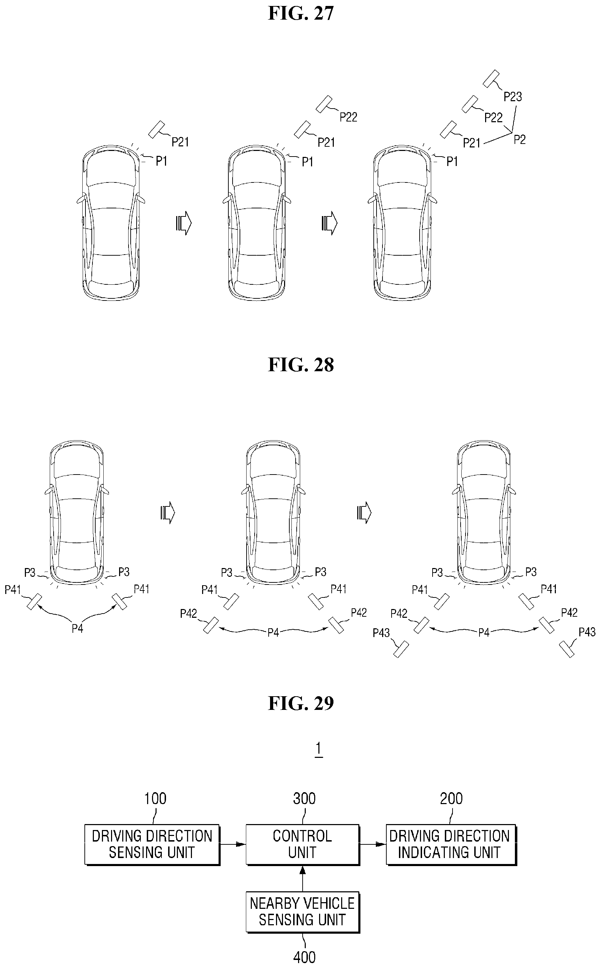

In addition, when turning on the second lamp module 220 or 240, the control unit 300 may be configured to adjust a plurality of light irradiation patterns P21 through P23 or P41 through P43 to be formed sequentially from the one positioned closest to the vehicle to the one located farthest from the vehicle in order to increase the recognizability of the driving direction of the vehicle. However, the order in which the light irradiation patterns P21 through P23 or P41 through P43 are formed may be changed. For example, when the driving direction indicating unit 200 indicates the turning direction of the vehicle as in the first exemplary embodiment, the control unit 300 may be configured to adjust the light irradiation patterns P21 through P23 to be formed sequentially from the light irradiation pattern P21 located closest to the vehicle to the light irradiation pattern P23 located farthest from the vehicle as illustrated in FIG. 27.

In addition, when the driving direction indicating unit 200 is configured to indicate the reversing of the vehicle as in the second exemplary embodiment, the control unit 300 may be configured to adjust the light irradiation patterns P41 through P43 to be formed sequentially from the light irradiation pattern P41 located closest to the vehicle to the light irradiation pattern P43 located farthest from the vehicle as illustrated in FIG. 28. In other words, when forming the road pattern P2 or P4 as described above, the control unit 300 may be configured to adjust the luminous intensity of the second lamp module 220 or 240 based on ambient brightness.

In the first and second exemplary embodiments, a case where each of the second lamp modules 220 and 240 has a brightness of 4,300 to 13,000 cd is described. In this case, the control unit 300 may be configured to adjust the luminous intensity of the second lamp module 220 or 240 by adjusting the intensity of electric current supplied to the second lamp module 220 or 240 based on the sensing result of, e.g., an illuminance sensor. The road patterns P2 and P4 according to the above-described exemplary embodiments are formed up to a predetermined distance from the vehicle. Therefore, when there is a nearby vehicle, the road patterns P2 and P4 may be formed on the nearby vehicle. Therefore, an automotive lamp 1 according to an exemplary embodiment may include a nearby vehicle sensing unit 400 in addition to a driving direction sensing unit 100, a driving direction indicating unit 200 and a control unit 300 as illustrated in FIG. 29.

The driving direction sensing unit 100, the driving direction indicating unit 200 and the control unit 300 according to the exemplary embodiment are the same as those described above with reference to FIG. 1, and thus a detailed description thereof will be omitted. The nearby vehicle sensing unit 400 according to the exemplary embodiment may be configured to sense nearby vehicles using various sensors such as an infrared sensor, an ultrasonic sensor and a radar and sense whether a nearby vehicle exists within a specific distance from a vehicle in which a road pattern P2 or P4 is formed. When a nearby vehicle is sensed, the control unit 300 may be configured to turn off at least one of a plurality of light sources 221 through 223 or 241 through 243 included in a second lamp module 220 or 240 based on the position of the nearby vehicle.

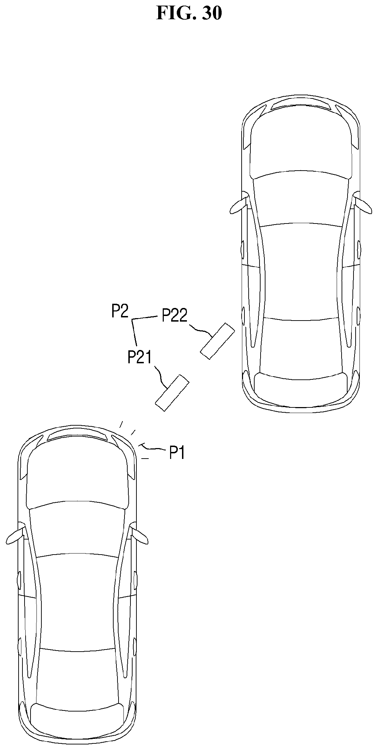

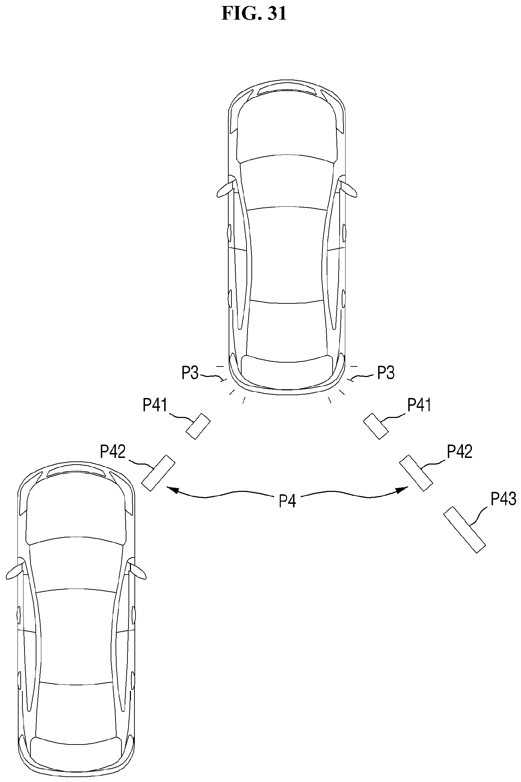

For example, when the driving direction indicating unit 200 indicates the turning direction of the vehicle as in the first exemplary embodiment, when a nearby vehicle exists within a distance in which the road pattern P2 is formed as illustrated in FIG. 30, the control unit 300 may be configured to turn off at least one of the light sources 221 through 223 of the second lamp module 220, thereby removing at least part of the road pattern P2. In addition, when the driving direction indicating unit 200 indicates the reversing of the vehicle as in the second exemplary embodiment, when a nearby vehicle exists within a distance in which the road pattern P4 is formed as illustrated in FIG. 31, the control unit 300 may be configured to turn off at least one of the light sources 241 through 243 of the second lamp module 240, thereby removing at least part of the road pattern P4.

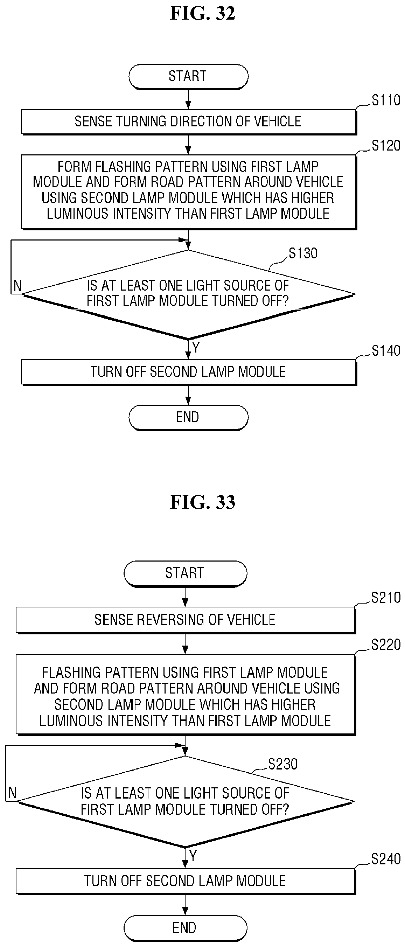

FIG. 32 is an exemplary flowchart illustrating a method of controlling an automotive lamp according to an exemplary embodiment. In FIG. 32, a case where the driving direction indicating unit 200 according to the first exemplary embodiment forms a road pattern according to the turning direction of a vehicle is described as an example. Referring to FIG. 32, in the method of controlling an automotive lamp according to the exemplary embodiment, the turning direction of a vehicle is sensed (operation S110). In other words, the turning direction of the vehicle may be understood as a left turn or a right turn at a crossroads or the direction of a lane change.

According to the sensed driving direction of the vehicle, a flashing pattern P1 may be formed using a first lamp module 210, and a road pattern P2 may be formed around the vehicle, that is, on at least one side in front of or behind the vehicle using a second lamp module 220 which has greater luminous intensity than the first lamp module 210 (operation S210). In other words, the second lamp module 220 which forms the road pattern P2 to indicate the turning direction of the vehicle may have a horizontal light irradiation angle of about 20 to 45 degrees and has a vertical light irradiation angle of about 15 to 45 degrees as described above. In addition, the second lamp module 220 may have a brightness of about 4,300 to 13,000 cd in view of ambient brightness.

Furthermore, a plurality of light irradiation patterns P21 through P23 included in the road pattern P2 may be formed simultaneously or sequentially and may have the same or different shapes or sizes. In a state where the road pattern P2 is formed in operation S120, when the first lamp module 210 is turned off (operation S130), the second lamp module 220 is also turned off (operation S140). When the first lamp module 210 is turned off in operation S130, it may mean that the first lamp module 210 as a whole may be turned off but also that at least one light source included in the first lamp module 210 may be turned off (e.g., due to a breakdown).

FIG. 33 is an exemplary flowchart illustrating a method of controlling an automotive lamp according to an exemplary embodiment. In FIG. 33, a case where the driving direction indicating unit 200 according to the second exemplary embodiment forms a road pattern when a vehicle reverses is described as an example. Referring to FIG. 33, in the method of controlling an automotive lamp according to the exemplary embodiment, the reversing of a vehicle may be sensed (operation S210). According to the sensed driving direction of the vehicle, a lighting pattern P3 may be formed using a first lamp module 230, and a road pattern P4 may be formed on at least one side behind the vehicle using a second lamp module 240 which has greater luminous intensity than the first lamp module 230 (operation S220).

In other words, the second lamp module 240 may be configured to form the road pattern P4 to indicate the reversing of the vehicle may have a horizontal light irradiation angle of about 20 to 45 degrees and has a vertical light irradiation angle of about 15 to 45 degrees as described above. In addition, the second lamp module 220 may have a brightness of about 4,300 to 13,000 cd in view of ambient brightness. Furthermore, a plurality of light irradiation patterns P41 through P43 included in the road pattern P4 may be formed simultaneously or sequentially and may have the same or different shapes or sizes. In a state where the road pattern P4 is formed in operation S220, when the first lamp module 230 is turned off (operation S230), the second lamp module 240 may also be turned off (operation S240). When the first lamp module 230 is turned off in operation S230, it may mean that the first lamp module 230 as a whole may be turned off but also that at least one light source included in the first lamp module 230 may be turned off (e.g., due to a breakdown).

An automotive lamp and a method of controlling the same according to present invention provide at least one of the following advantages. A road pattern indicating the turning direction or reversing of a vehicle may be formed on at least one side in front of or behind the vehicle, thereby enabling nearby vehicles or pedestrians to more easily recognize the driving direction of the vehicle.

However, the effects of the present invention are not restricted to the one set forth herein. The above and other effects of the present invention will become more apparent to one of daily skill in the art to which the present invention pertains by referencing the claims.

While the inventive has been particularly shown and described with reference to exemplary embodiments thereof, it will be understood by those of ordinary skill in the art that various changes in form and detail may be made therein without departing from the scope of the present disclosure as defined by the following claims. The exemplary embodiments may be considered in a descriptive sense only and not for purposes of limitation. The scope of the present invention is defined by the following claims, rather than by the above-described detailed description.

### LIST OF REFERENCE SIGNS

- 1: automotive lamp
- 20: tail lamp
- 100: driving direction sensing unit
- 200: driving direction indicating unit
- 200a: common substrate
- 210: first lamp module
- 210a: light source
- 210b: reflector
- 220: second lamp module
- 220a: light source
- 220b: reflector
- 221: light source unit
- 222: light source unit
- 223: light source unit
- 230: first lamp module
- 240: second lamp module
- 241: light source
- 242: light source
- 243: light source
- 300: control unit
- 400: nearby vehicle sensing unit
- P1: flashing pattern
- P2: road pattern
- P3: lighting pattern
- P4: road pattern
- P21: light irradiation pattern
- P22: light irradiation pattern
- P23: light irradiation pattern
- P41: light irradiation pattern
- P42: light irradiation pattern
- P43: light irradiation pattern
- CP: central part
- CL: road centerline

## Claims

1. An automotive lamp (1), comprising:
a driving direction sensing unit (100) configured to sense a driving direction of a vehicle;
a driving direction indicating unit (200) configured to be disposed on at least one side of the front or back of the vehicle and configured to indicate the driving direction of the vehicle; and
a control unit (300) configured to operate the driving direction indicating unit (200) based on the sensed driving direction,
wherein the driving direction indicating unit (200) includes a first lamp module (210,230), and a second lamp module (220, 240) which has luminous intensity greater than that of the first lamp module (210, 230) and is linked with the first lamp module (210, 230) to form a road pattern (P2, P4) on at least one side around the vehicle to indicate the driving direction of the vehicle,
wherein the road pattern (P2, P4) includes at least one light irradiation pattern (P21, P22, P23; P41, P42, P43) disposed in a predetermined direction from the vehicle,
wherein the second lamp module (220, 240) is coupled with the first lamp module (210, 230) so that, when the first lamp module (210, 230) turns on, the second lamp module (220, 240) forms the road pattern (P2, P4),
wherein the driving direction indicating unit (200) is disposed in any one of a plurality of cavities defined by a plurality of lamps used for different purposes, and the first lamp module (210, 230) and the second lamp module (220, 240) share a lens that corresponds to the cavity in which the driving direction indicating unit (200) is installed, and
wherein a vertical light irradiation angle of the second lamp module (220, 240) is in the range of about 15 to 45 degrees with respect to the road surface, when automotive lamp (1) is mounted to the vehicle.

2. The automotive lamp (1) of claim 1, wherein
the driving direction sensing unit (100) is configured to sense at least one of the turning direction and reversing of the vehicle and/or
the first lamp module (210, 230) and the second lamp module (220, 240) are configured to flash on and off or remain turned on.

3. The automotive lamp (1) of any of the preceding claims, wherein
a) the road pattern (P2, P4) includes a plurality of light irradiation patterns (P21, P22, P23; P41, P42, P43), and wherein the light irradiation patterns (P21, P22, P23; P41, P42, P43) have the same or different sizes.

4. The automotive lamp (1) of claim 3, wherein the light irradiation patterns (P21, P22, P23; P41, P42, P43) are formed sequentially in a predetermined order.

5. The automotive lamp (1) of any of the preceding claims, wherein the control unit (300) is configured
a) to simultaneously turn on or off the first lamp module (210, 230) and the second lamp module (220, 240); and/or
b) to turn off the second lamp module (220, 240) when at least one light source included in the first lamp module (210, 230) is turned off; and/or
c) to adjust the luminous intensity of the second lamp module (220, 240) based on ambient brightness of the vehicle.

6. The automotive lamp (1) of any of the preceding claims, wherein the luminous intensity of the second lamp module (220, 240) is in the range of:
a) about 4,300 to 13,000 cd, or
b) about 5,000 to 10,000 cd, or
c) about 5,500 to 8,500 cd.

7. The automotive lamp (1) of any of the preceding claims, wherein a horizontal light irradiation angle of the second lamp module (220, 240) is in the range of
a) about 0 to 45 degrees, or
b) about 5 to 45 degrees, or
c) about 10 to 45 degrees, or
d) about 20 to 45 degrees.

8. The automotive lamp (1) of claim 1, further comprising a nearby vehicle sensing unit (400) configured to sense a nearby vehicle, wherein the control unit (300) is configured to remove at least part of the at least one light irradiation pattern (P21, P22, P23; P41, P42, P43) by turning off at least one light source (241, 242, 243) included in the second lamp module (220, 240) based on the position of the nearby vehicle.

9. A method of controlling an automotive lamp (1), comprising:
sensing, by a controller a driving direction of a vehicle;
forming a flashing pattern or a lighting pattern, which indicates the driving direction of the vehicle, using the first lamp module (210, 230); and
forming a road pattern (P2, P4) on at least one side around the vehicle to indicate the driving direction of the vehicle using a second lamp module (220, 240) which has luminous intensity higher than that of the first lamp module (210, 230),
wherein the road pattern (P2, P4) includes at least one light irradiation pattern (P21, P22, P23; P41, P42, P43) disposed in a predetermined direction from the vehicle, and
wherein the second lamp module (220, 240) is coupled with the first lamp module (210, 230) so that, when the first lamp module (210, 230) turns on, the second lamp module (220, 240) forms the road pattern (P2, P4),
the flashing pattern or the lighting pattern and the road pattern (P2, P4) are irradiated via one lens and formed using the first lamp module (210, 230) and the second lamp module (220, 240), respectively, wherein a driving direction indicating unit (200) comprising the first lamp module (210, 230) and the second lamp module (220, 240) is disposed in any one of a plurality of cavities defined by a plurality of lamps used for different purposes, the first lamp module (210, 230) and the second lamp module (220, 240) share the lens that corresponds to the cavity in which driving direction indicating unit (200) is installed, and a vertical light irradiation angle of the second lamp module (220, 240) is in the range of about 15 to 45 degrees with respect to the road surface, when automotive lamp (1) is mounted to the vehicle.

10. The method of claim 9, wherein the forming of the road pattern (P2, P4) includes:
a) simultaneously turning on the first lamp module and the second lamp module (220, 240), and turning off the second lamp module (220, 240) when at least one light source included in the first lamp module (210, 230) is turned off; and/or
b) adjusting the luminous intensity of the second lamp module (220, 240) based on ambient brightness of the vehicle.

11. The method of any of the claims 9 or 10, wherein the road pattern (P2, P4) includes a plurality of light irradiation patterns (P21, P22, P23; P41, P42, P43), and
a) wherein forming of the road pattern (P2, P4) includes sequentially forming the light irradiation patterns (P21, P22, P23; P41, P42, P43) in a predetermined order; and/or
b) wherein forming of the road pattern (P2, P4) includes forming the light irradiation patterns (P21, P22, P23; P41, P42, P43) to have the same or different sizes.

12. The method of any of the claims 9 to 11, further comprising sensing a nearby vehicle, wherein the forming of the road pattern (P2, P4) includes removing at least part of the at least one light irradiation pattern (P21, P22, P23; P41, P42, P43) based on the position of the nearby vehicle.

## Patentansprüche

1. Fahrzeugleuchte (1), umfassend:
eine Fahrtrichtungserfassungseinheit (100), die so konfiguriert ist, dass sie eine Fahrtrichtung eines Fahrzeugs erfasst;
eine Fahrtrichtungsanzeigeeinheit (200), die so konfiguriert ist, dass sie an zumindest einer Seite der Vorder- oder Rückseite des Fahrzeugs angeordnet ist und so konfiguriert ist, dass sie die Fahrtrichtung des Fahrzeugs anzeigt; und
eine Steuereinheit (300), die so konfiguriert ist, dass sie die Fahrtrichtungsanzeigeeinheit (200) basierend auf der erfassten Fahrtrichtung betreibt,
wobei die Fahrtrichtungsanzeigeeinheit (200) ein erstes Leuchtenmodul (210, 230) und ein zweites Leuchtenmodul (220, 240), das eine Leuchtstärke aufweist, die größer als die des ersten Leuchtenmoduls (210, 230) ist und mit dem ersten Leuchtenmodul (210, 230) verbunden ist, umfasst, um auf zumindest einer Seite rund um das Fahrzeug ein Straßenmuster (P2, P4) zu bilden, das die Fahrtrichtung des Fahrzeugs anzeigt,
wobei das Straßenmuster (P2, P4) zumindest ein Lichtabstrahlmuster (P21, P22, P23; P41, P42, P43) umfasst, das in einer vorbestimmten Richtung von dem Fahrzeug angeordnet ist,
wobei das zweite Leuchtenmodul (220, 240) mit dem ersten Leuchtenmodul (210, 230) gekoppelt ist, so dass, wenn das erste Leuchtenmodul (210, 230) eingeschaltet wird, das zweite Leuchtenmodul 20 (220, 240) das Straßenmuster (P2, P4) bildet,
wobei die Fahrtrichtungsanzeigeeinheit (200) in einem einer Mehrzahl von Hohlräumen angeordnet ist, die durch eine Mehrzahl von Leuchten definiert sind, die für unterschiedliche Zwecke verwendet werden, und sich das erste Leuchtenmodul (210, 230) und das zweite Leuchtenmodul (220, 240) eine Linse teilen, die dem Hohlraum entspricht, in dem die Fahrtrichtungsanzeigeeinheit (200) installiert ist, und
wobei ein vertikaler Lichtabstrahlwinkel des zweiten Leuchtenmoduls (220, 240) in Bezug auf die Straßenoberfläche im Bereich von ungefähr 15 bis 45 Grad liegt, wenn die Fahrzeugleuchte (1) an dem Fahrzeug montiert ist.

2. Fahrzeugleuchte (1) nach Anspruch 1, wobei
die Fahrtrichtungserfassungseinheit (100) so konfiguriert ist, dass sie zumindest eines
der Abbiegerichtung und der Rückwärtsfahrt des Fahrzeugs erfasst und/oder
das erste Leuchtenmodul (210, 23 0) und das zweite Leuchtenmodul (220, 240) so konfiguriert sind, dass sie blinken oder eingeschaltet bleiben.

3. Fahrzeugleuchte (1) nach einem der vorhergehenden Ansprüche, wobei a) das Straßenmuster (P2, P4) eine Mehrzahl von Lichtabstrahlmustern (P21, P22, P23; P41, P42, P43) umfasst, und wobei die Lichtabstrahlmuster (P21, P22, P23; P41, P42, P43) die gleiche oder eine unterschiedliche Größe aufweisen.

4. Fahrzeugleuchte (1) nach Anspruch 3, wobei die Lichtabstrahlmuster (P21, P22, P23; P41, P42, P43) nacheinander in einer vorbestimmten Reihenfolge gebildet werden.

5. Fahrzeugleuchte (1) nach einem der vorhergehenden Ansprüche, wobei die Steuereinheit (300) so konfiguriert ist, dass sie
a) das erste Leuchtenmodul (210, 230) und das zweite Leuchtenmodul (220, 240) gleichzeitig ein- oder ausschaltet; und/oder
b) das zweite Leuchtenmodul (220, 240) ausschaltet, wenn zumindest eine in dem ersten Leuchtenmodul (210, 230) enthaltene Lichtquelle ausgeschaltet wird; und/oder
c) die Leuchtstärke des zweiten Leuchtenmoduls (220, 240) basierend auf der Umgebungshelligkeit des Fahrzeugs einstellt.

6. Fahrzeugleuchte (1) nach einem der vorhergehenden Ansprüche, wobei die Leuchtstärke des zweiten Leuchtenmoduls (220, 240) im Bereich von
a) ungefähr 4.300 bis 13.000 cd, oder
b) ungefähr 5.000 bis 10.000 cd, oder
c) ungefähr 5.500 bis 8.500 cd
liegt

7. Fahrzeugleuchte (1) nach einem der vorhergehenden Ansprüche, wobei ein horizontaler Lichtabstrahlwinkel des zweiten Leuchtenmoduls (220, 240) im Bereich von
a) ungefähr 0 bis 45 Grad, oder
b) ungefähr 5 bis 45 Grad, oder
c) 10 bis 45 Grad, oder
d) ungefähr 20 bis 45 Grad
liegt.

8. Fahrzeugleuchte (1) nach Anspruch 1, weiterhin umfassend eine Einheit zur Erfassung von sich in der Nähe befindlichen Fahrzeugen (400), die so konfiguriert ist, dass sie ein sich in der Nähe befindliches Fahrzeug erfasst, wobei die Steuereinheit (300) so konfiguriert ist, dass sie zumindest einen Teil des zumindest einen Lichtabstrahlmusters (P21, P22, P23; P41, P42, P43) durch Ausschalten zumindest einer Lichtquelle (241, 242, 243), die in dem zweiten Leuchtenmodul (220, 240) enthalten ist, basierend auf der Position des sich in der Nähe befindlichen Fahrzeugs entfernt.

9. Verfahren zur Steuerung einer Fahrzeugleuchte (1), umfassend:
Erfassen einer Fahrtrichtung eines Fahrzeugs durch eine Steuerung;
Bilden eines Blinkmusters oder eines Beleuchtungsmusters, das die Fahrtrichtung des Fahrzeugs anzeigt, unter Verwendung des ersten Leuchtenmoduls (210, 230); und
Bilden eines Straßenmusters (P2, P4) auf zumindest einer Seite rund um das Fahrzeug, um die Fahrtrichtung des Fahrzeugs unter Verwendung eines zweiten Leuchtenmoduls (220, 240) anzuzeigen, das eine Leuchtstärke aufweist, die höher als die des ersten Leuchtenmoduls (210, 230) ist,
wobei das Straßenmuster (P2, P4) zumindest ein Lichtabstrahlmuster (P21, P22, P23; P41, P42, P43) umfasst, das in einer vorbestimmten Richtung von dem Fahrzeug angeordnet ist, und
wobei das zweite Leuchtenmodul (220, 240) mit dem ersten Leuchtenmodul (210, 230) so gekoppelt ist, dass das zweite Leuchtenmodul (220, 240) das Straßenmuster (P2, P4) bildet, wenn das erste Leuchtenmodul (210, 230) eingeschaltet wird,
das Blinkmuster oder das Beleuchtungsmuster und das Straßenmuster (P2, P4) über eine Linse abgestrahlt werden und unter Verwendung des ersten Leuchtenmoduls (210, 230) bzw. des zweiten Leuchtenmoduls (220, 240) gebildet werden, wobei eine Fahrtrichtungsanzeigeeinheit (200), die das erste Leuchtenmodul (210, 230) und das zweite Leuchtenmodul (220, 240) umfasst, in einem von einer Mehrzahl von Hohlräumen angeordnet ist, die durch eine Mehrzahl von Leuchten definiert sind, die für unterschiedliche Zwecke verwendet werden, wobei sich das erste Leuchtenmodul (210, 230) und das zweite Leuchtenmodul (220, 240) die Linse teilen, die dem Hohlraum entspricht, in dem die Fahrtrichtungsanzeigeeinheit (200) installiert ist, und ein vertikaler Lichtabstrahlwinkel des zweiten Leuchtenmoduls (220, 240) in Bezug auf die Straßenoberfläche im Bereich von ungefähr 15 bis 45 Grad liegt, wenn die Fahrzeugleuchte (1) an dem Fahrzeug montiert ist.

10. Verfahren nach Anspruch 9, wobei das Bilden des Straßenmusters (P2, P4) umfasst:
a) gleichzeitiges Einschalten des ersten Leuchtenmoduls und des zweiten Leuchtenmoduls (220, 240) und Ausschalten des zweiten Leuchtenmoduls (220, 240), wenn zumindest eine Lichtquelle, die in dem ersten Leuchtenmodul (210, 230) enthalten ist, ausgeschaltet wird; und/oder
b) Einstellen der Leuchtstärke des zweiten Leuchtenmoduls (220, 240) basierend auf der Umgebungshelligkeit des Fahrzeugs.

11. Verfahren nach einem der Ansprüche 9 oder 10, wobei das Straßenmuster (P2, P4) umfasst:
eine Mehrzahl von Lichtabstrahlmustern (P21, P22, P23; P41, P42, P43), und
a) wobei das Bilden des Straßenmusters (P2, P4) das aufeinanderfolgende Bilden der Lichtabstrahlmuster (P21, P22, P23; P41, P42, P43) in einer vorbestimmten Reihenfolge umfasst; und/oder
b) wobei das Bilden des Straßenmusters (P2, P4) das Bilden der Lichtabstrahlmuster (P21, P22, P23; P41, P42, P43) mit der gleichen oder einer unterschiedlichen Größe umfasst.

12. Verfahren nach einem der Ansprüche 9 bis 11, ferner umfassend das Erfassen eines sich in der Nähe befindlichen Fahrzeugs, wobei das Bilden des Straßenmusters (P2, P4) das Entfernen zumindest eines Teils des zumindest einen Lichtabstrahlmusters (P21, P22, P23; P41, P42, P43) basierend auf der Position des sich in der Nähe befindlichen Fahrzeugs umfasst.

## Revendications

1. Phare d'automobile (1), comprenant :
une unité de détection de direction de conduite (100) prévue pour détecter la direction de conduite d'un véhicule ;
une unité d'indication de direction de conduite (200) prévue pour être disposée sur au moins un côté à l'avant ou à l'arrière du véhicule, et prévue pour indiquer la direction de conduite du véhicule ; et
une unité de commande (300) prévue pour commander l'unité d'indication de direction de conduite (200) sur la base de la direction de conduite détectée,
où l'unité d'indication de direction de conduite (200) comprend un premier module de phare (210, 230), et un deuxième module de phare (220, 240) dont l'intensité lumineuse est supérieure à celle du premier module de phare (210, 230) et qui est relié au premier module de phare (210, 230) pour former un tracé de route (P2, P4) sur au moins un côté autour du véhicule afin d'indiquer la direction de conduite du véhicule,
où le tracé de route (P2, P4) comprend au moins un tracé d'irradiation lumineuse (P21, P22, P23 ; P41, P42, P43) disposé dans une direction prédéterminée par rapport au véhicule,
où le deuxième module de phare (220, 240) est raccordé au premier module de phare (210, 230) de sorte que, lorsque le premier module de phare (210, 230) s'allume, le deuxième module de phare (220, 240) forme le tracé de route (P2, P4),
où l'unité d'indication de direction de conduite (200) est disposée dans une cavité quelconque d'une pluralité de cavités définies par une pluralité de feux utilisés à des fins différentes, et le premier module de phare (210, 230) et le deuxième module de phare (220, 240) partagent une lentille correspondant à la cavité où est installée l'unité d'indication de direction de conduite (200), et
où un angle d'irradiation lumineuse verticale du deuxième module de phare (220, 240) est compris entre 15 et 45 degrés environ par rapport à la surface de la route lorsque le phare d'automobile (1) est monté sur le véhicule.

2. Phare d'automobile (1) selon la revendication 1, où
l'unité de détection de direction de conduite (100) est prévue pour détecter le sens de braquage et/ou la marche arrière du véhicule, et/ou
le premier module de phare (210, 230) et le deuxième module de phare (220, 240) sont prévus pour clignoter ou rester allumés.

3. Phare d'automobile (1) selon l'une des revendications précédentes, où a) le tracé de route (P2, P4) comprend une pluralité de tracés d'irradiation lumineuse (P21, P22, P23 ; P41, P42, P43), et où les tracés d'irradiation lumineuse (P21, P22, P23 ; P41, P42, P43) ont la même dimension, ou différentes dimensions.

4. Phare d'automobile (1) selon la revendication 3, où les tracés d'irradiation lumineuse (P21, P22, P23 ; P41, P42, P43) sont formés séquentiellement dans un ordre prédéterminé.

5. Phare d'automobile (1) selon l'une des revendications précédentes, où l'unité de commande (300) est prévue
a) pour allumer ou éteindre simultanément le premier module de phare (210, 230) et le deuxième module de phare (220, 240) ; et/ou
b) pour éteindre le deuxième module de phare (220, 240) si au moins une source lumineuse comprise dans le premier module de phare (210, 230) est éteinte ; et/ou
c) pour régler l'intensité lumineuse du deuxième module de phare (220, 240) sur la base de la luminosité ambiante du véhicule.

6. Phare d'automobile (1) selon l'une des revendications précédentes, où l'intensité lumineuse du deuxième module de phare (220, 240) est comprise entre :
a) 4 300 et 13 000 cd environ, ou
b) 5 000 et 10 000 cd environ, ou
c) 5 500 et 8 500 cd environ.

7. Phare d'automobile (1) selon l'une des revendications précédentes, où un angle d'irradiation lumineuse horizontale du deuxième module de phare (220, 240) est compris entre
a) 0 et 45 degrés environ, ou
b) 5 et45 degrés environ, ou
c) 10 et 45 degrés environ, ou
d) 20 et 45 degrés environ.

8. Phare d'automobile (1) selon la revendication 1, comprenant en outre une unité de détection de véhicule à proximité (400) prévue pour détecter un véhicule à proximité, l'unité de commande (300) étant prévue pour supprimer au moins une partie dudit au moins un tracé d'irradiation lumineuse (P21, P22, P23 ; P41, P42, P43) par extinction d'au moins une source lumineuse (241, 242, 243) comprise dans le deuxième module de phare (220, 240), sur la base de la position du véhicule à proximité.

9. Procédé de commande d'un phare d'automobile (1), comprenant :
la détection, par un contrôleur, d'une direction de conduite d'un véhicule ;
la formation d'un tracé clignotant ou d'un tracé lumineux, indiquant la direction de conduite du véhicule, au moyen du premier module de phare (210, 230) ; et
la formation d'un tracé de route (P2, P4) sur au moins un côté autour du véhicule pour indiquer la direction de conduite du véhicule au moyen d'un deuxième module de phare (220, 240) dont l'intensité lumineuse est supérieure à celle du premier module de phare (210, 230), où le tracé de route (P2, P4) comprend au moins un tracé d'irradiation lumineuse (P21, 10 P22, P23 ; P41, P42, P43) disposé dans une direction prédéterminée par rapport au véhicule, et
où le deuxième module de phare (220, 240) est raccordé au premier module de phare (210, 230) de sorte que lorsque le premier module de phare (210, 230) s'allume, le deuxième module de phare (220, 240) forme le tracé de route (P2, P4),
le tracé clignotant ou le tracé lumineux et le tracé de route (P2, P4) sont irradiés via une lentille et respectivement formés au moyen du premier module de phare (210, 230) et du deuxième module de phare (220, 240), une unité d'indication de direction de conduite (200) comprenant le premier module de phare (210, 230) et le deuxième module de phare (220, 240) étant disposée dans une cavité quelconque d'une pluralité de cavités définies par une pluralité de feux utilisés à des fins différentes, le premier module de phare (210, 230) et le deuxième module de phare (220, 240) partageant la lentille correspondant à la cavité où est installée l'unité d'indication de direction de conduite (200), et un angle d'irradiation lumineuse verticale du deuxième module de phare (220, 240) est compris entre 15 et 45 degrés environ par rapport à la surface de la route lorsque le phare d'automobile (1) est monté sur le véhicule.

10. Procédé selon la revendication 9, où la formation du tracé de route (P2, P4) comprend :
a) l'allumage simultané du premier module de phare et du deuxième module de phare (220, 240), et l'extinction du deuxième module de phare (220, 240) si au moins une source lumineuse comprise dans le premier module de phare (210, 230) est éteinte ; et/ou
b) le réglage de l'intensité lumineuse du deuxième module de phare (220, 240) sur la base de la luminosité ambiante du véhicule.

11. Procédé selon la revendication 9 ou la revendication 10, où le tracé de route (P2, P4) comprend une pluralité de tracés d'irradiation lumineuse (P21, P22, P23 ; P41, P42, P43), et a) où la formation du tracé de route (P2, P4) comprend la formation séquentielle des tracés d'irradiation lumineuse (P21, P22, P23 ; P41, P42, P43) dans un ordre prédéterminé ; et/ou b) où la formation du tracé de route (P2, P4) comprend la formation des tracés d'irradiation lumineuse (P21, P22, P23 ; P41, P42, P43) de sorte que ceux-ci aient la même dimension, ou différentes dimensions.

12. Procédé selon l'une des revendications 9 à 11, comprenant en outre la détection d'un véhicule à proximité, la formation du tracé de route (P2, P4) comprenant la suppression d'au moins une partie dudit au moins un tracé d'irradiation lumineuse (P21, P22, P23 ; P41, P42, P43) sur la base de la position du véhicule à proximité.
